# EUROPEAN PATENT SPECIFICATION

(11) **EP 3 018 738 B1**
(45) Date of publication and mention of the grant of the patent: **05.07.2017**
(21) Application number: 15187869.1
(22) Date of filing: 10.03.2014
(51) Int. Cl.: H01M 4/485, C01G 45/12, C01B 33/113, H01M 10/0525, H01M 10/052, H01M 4/02

(54) **ACTIVE MATERIAL FOR BATTERY, NONAQUEOUS ELECTROLYTE BATTERY AND BATTERY PACK**
AKTIVES MATERIAL FÜR BATTERIE, NICHTWÄSSRIGE ELEKTROLYTBATTERIE UND BATTERIEPACK
MATÉRIAU ACTIF POUR BATTERIE, BATTERIE À ÉLECTROLYTE NON AQUEUX ET BLOC-BATTERIE

(30) Priority: 26.03.2013 JP 2013064841; 03.03.2014 JP 2014040946
(43) Date of publication of application: 11.05.2016
(62) Divisional of application: 14158617.2
(73) Proprietor: Kabushiki Kaisha Toshiba, Tokyo 105-8001 (JP)
(72) Inventor: Harada, Yasuhiro, Tokyo, 105-8001 (JP); Takami, Norio, Tokyo, 105-8001 (JP); Inagaki, Hiroki, Tokyo, 105-8001 (JP); Yoshida, Yorikazu, Tokyo, 105-8001 (JP); Ise, Kazuki, Tokyo, 105-8001 (JP)
(74) Representative: Hoffmann Eitle

(56) References cited:
- US-A1- 2012 052 401
- XIA LU ET AL: "Atomic-scale investigation on lithium storage mechanism in TiNb2O7,", ENERGY & ENVIRONMENTAL SCIENCE, vol. 4, no. 8, 13 July 2011 (2011-07-13), page 2638, XP055124833, ISSN: 1754-5692, DOI: 10.1039/c0ee00808g
- JIAN-TAO HAN ET AL: "New Anode Framework for Rechargeable Lithium Batteries", CHEMISTRY OF MATERIALS, vol. 23, no. 8, 29 March 2011 (2011-03-29) , pages 2027-2029, XP055125255, ISSN: 0897-4756, DOI: 10.1021/cm200441h

## Description

### FIELD

Embodiments described herein relate generally to an active material for battery, a nonaqueous electrolyte battery and a battery pack including the same.

### BACKGROUND

In recent years, nonaqueous electrolyte batteries such as lithium ion secondary batteries are ardently studied and developed to make high energy density batteries. Nonaqueous electrolyte batteries are expected to find applications such as the power source for hybrid automobiles and electric automobiles, and uninterruptible power supply of mobile stations. Therefore, nonaqueous electrolyte batteries are expected to have other features such as quick charge and discharge characteristics, and long-term reliability. For example, nonaqueous electrolyte batteries which can be quickly charged and discharged allows marked reduction of the charge time, and also allows the improvement in the engine performance of hybrid automobiles and efficient recovery of regenerated energy of engine power.

Quick charge and discharge requires quick movement of electrons and lithium ions between the positive and negative electrodes.

Firstly, batteries including a carbon-based negative electrode were developed. However, when a battery including a carbon-based negative electrode is repeatedly subjected to quick charge and discharge, dendrites of metal lithium deposit on the electrode, which can result in heat generation and ignition caused by internal short-circuit.

Therefore, batteries including a metal complex oxide in place of a carbonaceous substance as the negative electrode were developed. In particular, a battery including titanium oxide as the negative electrode allows stable and quick charge and discharge, and has a longer life than those including a carbon-based negative electrode.

However, titanium oxide has a higher (nobler) potential to metal lithium than carbonaceous substances. In addition, titanium oxide has a low capacity for the unit weight. Therefore, the battery including titanium oxide as the negative electrode has a low energy density.

Specifically, the electrode potential of titanium oxide is about 1.5 V with reference to metal lithium, which is higher (nobler) in comparison with the potential of a carbon-based negative electrode. The potential of titanium oxide is attributable to the oxidation-reduction reaction between Ti³⁺ and Ti⁴⁺ during electrochemical insertion and desorption of lithium, and thus is electrochemically limited. In addition, there is a fact that quick charge and discharge of lithium ions can be stably carried out at a high electrode potential of about 1.5 V. Accordingly, it is substantially difficult to decrease the electrode potential for improving the energy density.

Regarding the capacity for the unit weight, the theoretical capacity of titanium dioxide (anatase type) is about 165 mAh/g, and the theoretical capacity of a lithium titanium complex oxide such as Li₄Ti₅O₁₂ is about 180 mAh/g. On the other hand, the theoretical capacity of a common graphite-based electrode material is 385 mAh/g or more. Accordingly, the capacity density of titanium oxide is markedly lower than that of a carbon-based negative electrode. The reason for this is that the crystal structure of titanium oxide contains few sites for occluding lithium, and lithium is readily stabilized in the structure, which results in the decrease of the substantial capacity.

In a publication by X. Lu et al. (Energy Environ. Sci., 2011, Vol. 4, 2639-2644), the preparation of titanium niobium oxide (TiNb₂O₇) by a solid state reaction method is described. For this, TiO₂ Nb₂O₅ and ethanol were milled in a ball-mill. After drying, a pellet of the resulting powder was heated at 1350°C for 24 h. The above publication does not disclose a subsequent annealing step at a temperature lower than 1000°C.

### BRIEF DESCRIPTION OF THE SEVERAL VIEWS OF THE DRAWING

FIG. 1 is a schematic view showing the crystal structure of monoclinic TiNb₂O₇;
FIG. 2 is a schematic view showing the crystal structure of FIG. 1 viewed from other direction;
FIG. 3 is a cross sectional view of a flat nonaqueous electrolyte battery according to the second embodiment;
FIG. 4 is an enlarged cross sectional view showing the part indicated with A in FIG. 3;
FIG. 5 is a partially cutaway perspective view schematically showing the other flat nonaqueous electrolyte battery according to the second embodiment;
FIG. 6 is an enlarged cross sectional view showing the part indicated with B in FIG. 5;
FIG. 7 is an exploded perspective view of the battery pack according to the third embodiment; and
FIG. 8 is a block diagram showing the electric circuit of the battery pack of FIG. 7.

### DETAILED DESCRIPTION

In general, according to one embodiment, an active material for battery includes a monoclinic complex oxide. The monoclinic complex oxide is expressed by the general formula LiₓM1M2₂O_{(7±δ)} (wherein M1 is at least one element selected from the group consisting of Ti, Zr, Si, and Sn, M2 is at least one element selected from the group consisting of Nb, V, Ta, Bi, and Mo, 0 ≤ x ≤ 5, and 0 ≤ δ ≤ 0.3), and has symmetry belonging to the space group C2/m (International tables Vol. A No. 12), and one element of the M2 or M1 being maldistributed in the occupied 2a and 4i sites in a crystal of the monoclinic complex oxide. More specifically, in the 2a or 4i occupied sites in a crystal of the monoclinic complex oxide, an occupancy g_{M1} of M1 is g_{M1} > 1/3 ± σⱼ or g_{M1} < 1/3 ± σⱼ, an occupancy g_{M2} of M2 is g_{M2} > 2/3 ± σⱼ or g_{M2} < 2/3 ± σⱼ, and g_{M1} + g_{M2} is 1.0, wherein σⱼ means the standard deviation when the occupancy is determined by the Rietveld method and σⱼ is in the range of 0.03 ≤ σⱼ ≤ 0.05.

### (First embodiment)

The active material for battery according to a first embodiment includes a monoclinic complex oxide which is expressed by the general formula LiₓM1M2₂O_{(7±δ)} (wherein M1 is at least one element selected from the group consisting of Ti, Zr, Si, and Sn, M2 is at least one element selected from the group consisting of Nb, V, Ta, Bi, and Mo, 0 ≤ x ≤ 5, and 0 ≤ δ ≤ 0.3), and has symmetry belonging to the space group C2/m (International tables Vol. A No. 12, unique axis b, cell choice 1) or C1 2/m 1 in detailed notation, and one element of the M2 or M1 being maldistributed in the occupied 2a and 4i sites in a crystal of the monoclinic complex oxide as defined in claim 1.

The 2a site is expressed using Wyckofr notation, and means the occupied site which has 2/m symmetry and is expressed by the atomic coordinate (0, 0, 0). The 4i site is expressed using Wyckofr notation, and means the occupied site which has m symmetry and is expressed by the atomic coordinate (X, 0, Y) and (-X, 0, -Y), wherein X and Y are arbitrary numbers.

The monoclinic complex oxide has a lithium occlusion potential of about 1.5 V (to Li/Li⁺), and thus allows stable repeated quick charge and discharge.

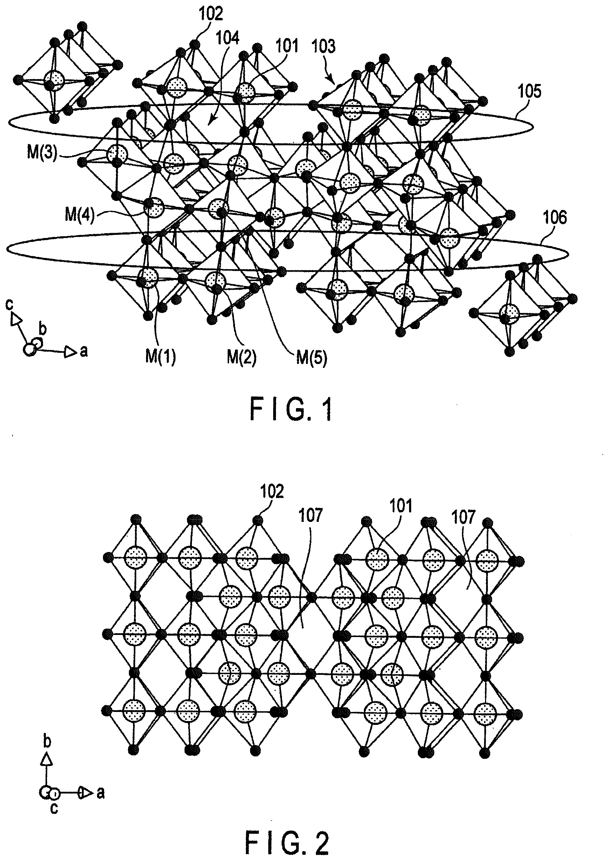

As an example of the monoclinic complex oxide expressed by the general formula LiₓM1M2₂O_{(7±δ)}, FIGS. 1 and 2 show schematic views of the crystal structure of monoclinic TiNb₂O₇.

As shown in FIG. 1, in the crystal structure of monoclinic TiNb₂O₇, metal ions 101 and oxide ions 102 form a skeleton structure 103. In a known material, the metal ions 101 are composed of Nb and Ti ions which are randomly arranged in the ratio of Nb : Ti = 2 : 1. On the other hand, in the monoclinic TiNb₂O₇ according to the present embodiment, in the occupied sites of M(1) to M(5) in FIG. 1, the occupancy g_{M1} in M1 is g_{M1} > 1/3 ± σⱼ or g_{M1} < 1/3 ± σⱼ, and the occupancy g_{M2} in M2 is g_{M2} > 2/3 ± σⱼ or g_{M2} < 2/3 ± σⱼ, and g_{M1} + g_{M2} is 1.0, wherein σⱼ means the standard deviation when the occupancy is determined by the Rietveld method and σⱼ is in the range of 0.03 ≤ σⱼ ≤ 0.05.

This means that the sites in the crystal structure are separated into the site preferentially containing pentavalent cations, and the site preferentially containing tetravalent cations. In this case, the binding between the metal ion and oxide ion is controlled by enthalpy, whereby the crystal lattice is stabilized. Furthermore, in the vicinity of the site containing more pentavalent cations, electron correlation with the oxide ions coordinated to the surrounding area is strengthened, so that the electron correlation between the lithium ions to be guest and the oxide ion is weakened, whereby the mobility of the lithium ions in the solid is improved. Skeleton structures 103 are alternately and three-dimensionally arranged, and gap parts 104 are present between the skeleton structures 103. The gap parts 104 host the lithium ions. The site hosting the lithium ions is arranged between the crystal lattices which are enthalpically stable as described above, so that Li is more stably inserted in comparison with a known crystal structure having a random arrangement.

In FIG. 1, regions 105 and 106 have two-dimension channels in the [100] and [010] directions. As shown in FIG. 2, the crystal structure of monoclinic TiNb₂O₇ has gap parts 107 in the [001] direction. The gap parts 107 have a tunnel structure which is advantageous for conducting lithium ions, and work as the conductive channel connecting the regions 105 and 106 in the [001] direction. The conductive channel allows the movement of the lithium ions between the regions 105 and 106.

In this manner, according to the present embodiment, the sites in the crystal structure of the monoclinic complex oxide are separated into the site preferentially containing pentavalent cations and the site preferentially containing tetravalent cations, whereby the crystal lattice hosting the lithium ions is stabilized. Furthermore, there is a site which preferentially contains the pentavalent cations effective for weakening the interaction between the lithium ions and oxide ions, and the coexistence of the region having a two-dimensional channel wherein lithium ions are quickly diffused and the conductive channel connecting them in the [001] direction facilitates the insertion and desorption of lithium ions. As a result of this, a high capacity and a high rate performance are provided.

The crystalline plane indices shown in the embodiment have the symmetry of the space group C2/m (International tables Vol. A No. 12, unique axis b, cell choice 1), and indexed based on the atomic coordinate described in Table 1.

The monoclinic complex oxide expressed by the general formula LiₓM1M2₂O_{(7±δ)} (0≤ x ≤ 5, and 0 ≤ δ ≤ 0.3) according to the present embodiment contains a tetravalent M1 cation selected from Ti, Zr, Si, and Sn, and a pentavalent or hexavalent M2 cation selected from Nb, V, Ta, Bi, and Mo.

When lithium ions are inserted into the gap parts 104, the metal ions 101 composing the skeleton are reduced to trivalent, whereby electrical neutrality of the crystal is maintained. In the monoclinic complex oxide according to the present embodiment, a tetravalent cation is reduced from tetravalent to trivalent, and also a pentavalent cation is reduced from pentavalent to trivalent. A hexavalent cation is also reduced according to the reduction potential. Therefore, the reduction valence for the unit weight of the active material is higher than that of a compound containing a tetravalent cation only. Therefore, electrical neutrality of the crystal is maintained even if many lithium ions are inserted. Accordingly, the energy density is higher than that of a compound containing a tetravalent cation only, such as titanium oxide. As a result of this, the theoretical capacity of the monoclinic complex oxide according to the present embodiment is about 387 mAh/g, which is two or more times that of a titanium oxide having spinel structure.

The monoclinic complex oxide expressed by the general formula LiₓM1M2₂O_{(7±δ)} (0≤ x ≤ 5, and 0 ≤ δ ≤ 0.3) according to the present embodiment contains one tetravalent cation and two pentavalent cations for a unit structure, so that theoretically up to five lithium ions can be inserted between the layers. Therefore, in the general formula LiₓM1M2₂O_{(7±δ)}, x is 0 or more and 5 or less, and δ varies depending on the reduction state of the monoclinic complex oxide. If δ exceeds -0.3, phase separation can occur. The value of δ up to +0.3 is within the range of measurement error.

The monoclinic complex oxide according to the present embodiment preferably contains Ti and Nb, and is more preferably TiNb₂O₇. It corresponds to, in the above-described general formula, an oxide wherein y = 0 and z = 0, more specifically an oxide wherein the tetravalent cation is Ti⁴⁺ and the pentavalent cation is Nb⁵⁺. TiNbO₇ can offer a crystal lattice which is ideal for lithium ion conductivity, so that allow further improvement in the quick charge and discharge performance and electrode capacity.

The monoclinic complex oxide according to the present embodiment preferably shows the strongest peak at 2θ = 26° ± 0.5° in the pattern of powder x-ray diffraction using a Cu-Kα line source. The peak appearing at 2θ = 26° ± 0.5° is considered mainly the peak of the (0 0 3) plane. When the peak appearing at 2θ = 26° ± 0.5° is the strongest peak, the crystallite size of the (0 0 3) plane is likely large in the crystal structure, and the crystallite is likely growing in a [001] direction. As described above, the [001] direction is an only path connecting the upper and lower two-dimensional channels, so that the growth of this part promotes the insertion and desorption of lithium ions into and from the insertion space, and effectively increases the insertion and desorption space for lithium ions. In addition, the direction is used as the conductive path of lithium ions to be inserted into the vicinity of the site preferentially containing tetravalent cations and the site preferentially containing pentavalent cations. As a result of this, a high charge and discharge capacity and high rate performance will be provided. In addition, lithium ions are easily inserted and desorbed, so that deficit of lithium is small, and thus marked charge and discharge effectiveness can be achieved.

The peak of the (1 1 1) plane may appear in the range of 2θ = 26° ± 0.5°, but it is often difficult to separate the peaks of the (0 0 3) and (1 1 1) planes, because the distance between the planes is small.

The battery active material according to the first embodiment is, as will be described later, used as a material of the negative electrode of a nonaqueous electrolyte battery, and also usable as a material of its positive electrode. In both cases, the battery active material according to the first embodiment achieves its effects, or marked repeated quick charge and discharge performance and a high energy density.

### <Particle size and BET specific surface area>

The average particle size of the complex oxide according to the present embodiment is not particularly limited, and may be changed according to the desired battery characteristics. However, in order to improve the diffusivity of lithium, the particle size is preferably smaller. The average particle size is preferably from 0.1 µm to 10 µm, and more preferably from 0.1 µm to 1 µm.

The particle size distribution (weight criterion distribution) and aspect ratio of powder may be measured by a laser diffractometer. The particle size distribution is measured by the laser diffractometer, and the weight distribution (% by weight) is calculated. At this time, it is preferred that flocculation be prevented by ultrasonic vibration. The measurement conditions follow those recommended by the manufacturer of the laser diffractometer. At this time, the material to be measured is an electrode assembly, the electrode, which has been cut as necessary, is immersed in a solvent (preferably an organic solvent such as alcohol or NMP) and subjected to ultrasonic vibration, thereby taking out the active material. As a result of this, the current collector foil and active material can be detached. Subsequently, the dispersion solvent containing the separated current collector foil is preferably subjected to centrifugation, thereby isolating the active material from the powder of the electrode assembly containing conductive additives such as carbon. Alternatively, when any material (e.g., carbon, collector, or binder) other than the electrode assembly is present, preliminary measurement should be carried out using the powder free of the material, thereby subtracting the value from the measurement result.

The BET specific surface area of the complex oxide according to the present embodiment is not particularly limited, and preferably 5 m²/g or more and less than 200 m²/g. When the specific surface area is 5 m²/g or more, the contact area with the electrolytic solution is secured, whereby good discharge rate characteristics are easily achieved, and the charge time is reduced. When the specific surface area is less than 200 m²/g, reactivity to the electrolytic solution will not be too high, whereby life characteristics are improved. In addition, the application properties of the slurry containing an active material, which is used for the manufacture of the below-described electrode, is improved.

The specific surface area is measured by allowing a molecule, the area occupied by which is known, to absorb to the surface of powder particles at the temperature of liquid nitrogen, and determining the specific surface area of the sample from the amount of the molecule. The most frequently used is the BET method based on the physical adsorption of an inactive gas at low temperature and low humidity. The BET method is an extension of the Langmuir theory, which is a theory for monolayer molecular adsorption, to multilayer adsorption, and is the most famous theory for calculating the specific surface area. The specific surface area thus determined is referred to as BET specific surface area.

### <Manufacturing method> (Not part of the claimed invention)

The monoclinic complex oxide according to the present embodiment may be manufactured by the following method.

Firstly, an oxide or salt containing at least one element M1 selected from the group consisting of Ti, Zr, Si, and Sn, and an oxide or salt containing at least one element M2 selected from the group consisting of Nb, V, Nb, Ta, Bi, and Mo are blended at a molar ratio which gives the monoclinic complex oxide expressed by the general formula LiₓM1M2₂O_{(7±δ)} (0 ≤ x ≤ 5, 0 ≤ δ ≤ 0.3). The above-described salt is preferably a carbonate, nitrate, or a salt which is decomposed at a relatively low temperature to form an oxide. These raw material compounds are pulverized to an average particle size of 5 µm or less, and blended as much as uniformly.

The mixture thus obtained is calcined at 800 to 1200°C to obtain a calcined product, and then the product is sintered to obtain a sintered product. The sintering is carried in multiple times in the temperature range of 1100 to 1500°C for 5 to 30 hours in total. The sintering in multiple times is preferred for accelerating the growth in the [001] direction during cooling. In addition, stepwise changing of the sintering temperature is effective for achieving good crystallinity. For example, the temperature of the first sintering is 1100°C, the second sintering is 1200°C, and the third sintering is 1350°C. More preferably, the particles synthesized during the sintering in multiple times are crushed, thereby suppressing the growth of coarse particles.

In this manner, the crystallinity is improved by repeating multiple times of sintering, and obtained is a monoclinic complex oxide which shows the strongest peak at 2θ = 26° ± 0.5° in the pattern of powder x-ray diffraction using a Cu-Kα line source.

Subsequently, the sintered product is annealed (heat-treated) at a temperature of lower than 1000°C for 30 minutes to 40 hours. As a result of this, a monoclinic complex oxide which has symmetry belonging to the space group C2/m, or detailed notation C1 2/m 1 (International tables Vol. A No. 12, unique axis b, cell choice 1) is obtained, one of the element M2 or M1 being maldistributed in the occupied 2a and 4i sites in the crystal as defined in claim 1. More preferably, annealing is carried out at a temperature range of 300°C to 900°C over a period of 30 minutes to 12 hours. If the heat treatment temperature is lower than 300°C, rearrangement of the atoms in the crystal is slow, so that sufficient annealing effect cannot be achieved. If the heat treatment temperature is higher than 900°C, heat vibration applied to the atoms becomes strong, so that the atoms tend to be randomly arranged, controlled by entropy.

The monoclinic complex oxide synthesized as described above is charged to insert lithium ions thereinto. Alternatively, a lithium-containing compound such as lithium carbonate may be used as the synthetic raw material, thereby obtaining a monoclinic complex oxide containing lithium.

### <Powder x-ray diffractometry>

The measurement by powder x-ray diffraction (X-ray diffraction: XRD) may be carried out as follows. Firstly, an active material is pulverized to prepare a sample having an average particle size less than about 5 µm. The average particle size may be measured by laser diffraction analysis. The sample thus obtained is charged into the holder part having a depth of 0.2 mm formed on a glass sample plate. Subsequently, the surface of the filled sample is smoothened by pressing with another glass plate from the outside. The sample must be in a proper amount, thereby avoiding development of cracks, gaps, or unevenness in the filled sample. In addition, the glass plate must be pressed under a sufficient pressure. Subsequently, the glass plate filled with the sample is mounted on the powder x-ray diffraction apparatus, and the XRD pattern is obtained using a Cu-Kα line.

When the sample is highly oriented, the peak position may be shifted and the position intensity ratio may be changed by the state of sample filling. Such a highly oriented sample is measured using a capillary. More specifically, the sample is inserted into a capillary, the capillary is mounted on a rotary sample stand, and subjected to measurement. This measurement method relaxes the orientation. The capillary used herein is made of Lindemann glass.

The active material included in the battery as an electrode material may be measured as follows. Firstly, lithium ions are completely desorbed from a complex oxide containing niobium and titanium. For example, when the active material is included in the negative electrode, the battery is completely discharged. As a result of this, the crystal condition of the active material can be observed. However, residual lithium ions may be present even in a discharged state. Subsequently, the battery is decomposed, and the electrode is taken out in a glove box filled with argon. The electrode taken out is washed with an adequate solvent. For example, ethyl methyl carbonate may be used. The washed electrode is cut to the size almost equal to the area of the holder of a powder x-ray diffraction apparatus, and used as the sample for measurement. The sample is affixed directly to the glass holder, and measured. At this time, the position of the peak originated from the electrode substrate such as metal foil is measured in advance. In addition, the peaks of the components such as a conductive agent and a binder are also measured in advance. When the peaks of the substrate and active material overlap, it is preferred that the layer containing the active material (e.g., the below-described active material layer) be separated from the substrate, and subjected to measurement. This is a process for separating the overlapping peaks when the peak intensity is quantitatively measured. For example, the active material layer can be separated by irradiating the electrode substrate with an ultrasonic wave in a solvent. The active material layer is sealed into the capillary, mounted on the rotary sample table, and measured. As a result of this process, the XRD pattern of the active material is obtained with the influence of the orientation reduced. The XRD pattern obtained at this time must be applicable to Rietveld analysis. In order to collect the data for Rietveld analysis, the measurement time or x-ray intensity is appropriately adjusted in such a manner that the step width is made 1/3 to 1/5 the minimum half width of the diffraction peaks, and the intensity at the peak position of highest reflected intensity is from 5,000 to 10,000 counts.

The XRD pattern thus obtained is analyzed by the Rietveld method. In the Rietveld method, the diffraction pattern is calculated from the model of the crystal structured which has been predicted in advance. The parameters of the crystal structure (e.g., lattice constant, atomic coordinate, and occupancy) can be precisely analyzed by fitting all the calculated values and measurement values. As a result of this, the characteristics of the crystal structure of the synthesized oxide are determined. In addition, the occupancies in the sites of the respective constitutional elements can be determined. A fitting parameter S is used as the scale for estimating the degree of agreement between the measured intensity and calculated intensity in the Rietveld analysis. The S value must be less than 1.8 in the analysis. When determining the occupancies in the respective sites, the standard deviation σⱼ must be taken into consideration. The fitting parameter S and standard deviation σⱼ defined herein are estimated using the formula described in "Funmatsu X sen Kaisetsu no Jissai (Reality of Powder x-Ray Analysis", X-Ray Analysis Investigation Conversazione, The Japan Society for Analytical Chemistry, written and edited by Izumi Nakai and Fujio Izumi (Asakura Publishing Co., Ltd.). Using this method, maldistribution of the elements can be confirmed by ensuring that the occupancy g_{M1} of M1 is g_{M1} > 1/3 ± σⱼ or g_{M1} < 1/3 ± σⱼ, the occupancy g_{M2} of M2 is g_{M2} > 2/3 ± σⱼ or g_{M2} < 2/3 ± σⱼ, and g_{M1} + g_{M2} is 1.0 in the 2a or 4i occupied sites of the LiₓM1M2₂O_{(7±δ)} (0 ≤ x ≤ 5, 0 ≤ δ ≤ 0.3) according to the present embodiment.

According to the above embodiment, provided is an active material for battery which achieves marked repeated quick charge and discharge performance, and has a high energy density.

### (Second embodiment)

The second embodiment provides a nonaqueous electrolyte battery including a negative electrode containing the active material for battery according to the first embodiment, a positive electrode, a nonaqueous electrolyte, a separator, and an exterior member.

The negative electrode, positive electrode, nonaqueous electrolyte, separator, and exterior member are further described below.

### 1) Negative electrode

The negative electrode includes a collector and a negative electrode layer (a negative electrode active material-containing layer). The negative electrode layer is formed on one or both sides of the collector, and contains an active material, and optionally a conductive agent and a binder.

The negative electrode active material is the active material for battery described in the first embodiment, the active material for battery containing a monoclinic complex oxide which is expressed by the general formula LiₓM1M2₂O_{(7±δ)} (0 ≤ x 5, and 0 ≤ δ ≤ 0.3), and has symmetry belonging to the space group C2/m, wherein the occupancy g_{M1} in M1 is g_{M1} > 1/3 ± σⱼ or g_{M1} < 1/3 ± σⱼ, and the occupancy g_{M2} in M2 is g_{M2} > 2/3 ± σⱼ or g_{M2} < 2/3 ± σⱼ, and g_{M1} + g_{M2} is 1.0 in the occupied 2a or 4i site in the crystal structure. Herein, σⱼ means the standard deviation when the occupancy is determined by the Rietveld method and σⱼ is in the range of 0.03 ≤ σⱼ ≤ 0.05. The M1 is at least one element selected from the group consisting of Ti, Zr, Si, and Sn, and M2 is at least one element selected from the group consisting of V, Nb, Ta, and Bi.

The negative electrode including this negative electrode active material can provide a nonaqueous electrolyte battery which achieves marked quick charge and discharge performance, and has a high energy density.

As described above, the monoclinic complex oxide expressed by the general formula LiₓM1M2₂O_{(7±δ)} (0 ≤ x ≤ 5,0 ≤ δ ≤ 0.3) preferably shows the strongest peak at 2θ = 26° ± 0.5° in the pattern of powder x-ray diffraction using a Cu-Kα line source. The monoclinic complex oxide satisfying the above conditions has marked stability of the crystal structure and has high crystallinity. Therefore, the negative electrode including this negative electrode active material can provide a nonaqueous electrolyte battery which achieves higher quick charge and discharge performance, and has a higher energy density.

As the negative electrode active material, the monoclinic complex oxide expressed by the general formula LiₓM1M2₂O_{(7±δ)} (0 ≤ x ≤ 5, 0 ≤ δ ≤ 0.3) may be used singly, or in combination with other active material. Examples of other active material include anatase titanium dioxide (TiO₂), monoclinic TiO₂ (B), ramsdellite lithium titanate (e.g., Li₂Ti₃O₇), and spinel lithium titanate (e.g., Li₄Ti₅O₁₂).

The conductive agent is added for improving the current collection performance, and suppressing the contact resistance between the active material and collector. Examples of the conductive agent include carbonaceous substances such as acetylene black, carbon black, and graphite.

The binder is added for filling the gap between the dispersed negative electrode active materials, and binding the active material with the collector. Examples of the binder include polytetrafluoroethylene (PTFE), polyvinylidene fluoride (PVdF), fluorine rubber, and styrene butadiene rubber.

The contents of the active material, conductive agent and binder in the negative electrode layer are preferably 68% by mass or more and 96% by mass or less, 2% by mass or more and 30% by mass or less, and 2% by mass or more and 30% by mass or less, respectively. When the content of the conductive agent is 2% by mass or more, the current collection performance of the negative electrode layer is improved. In addition, when the content of the binder is 2% by mass or more, binding between the negative electrode layer and collector is sufficiently achieved, and marked cycling characteristics can be expected. On the other hand, each of the contents of the conductive agent and binder is preferably 28% by mass or less, thereby increasing the capacity. Further, in order to improve the electrical conductivity between the particles, the particle surface is preferably coated with carbon. The means for carbon-coated is not particularly limited, but marked electrical conductivity can be achieved by adhering an organic substance as a carbon source to the particle surface, followed by heating for carbonization. The coating weight of carbon-coated is not particularly limited, but the electron conductivity of the electrode is improved when the coating is 0.5% by mass or more.

The collector is a material which is electrochemically stable at the occlusion and discharge potentials of lithium as the negative electrode active material. The collector is preferably made of copper, nickel, stainless steel or aluminum, or an aluminum alloy containing one or more elements selected from Mg, Ti, Zn, Mn, Fe, Cu, and Si. The thickness of the collector is preferably from 5 to 20 µm. The collector having the thickness within this range strikes the balance between the strength and weight reduction of the negative electrode.

The negative electrode is made by, for example, suspending a negative electrode active material, a binder, and a conductive agent in an ordinary solvent to prepare a slurry, applying the slurry to a collector, drying the coating to form a negative electrode layer, and then pressing the layer. Alternatively, the negative electrode may be made by forming a negative electrode active material, a binder, and a conductive agent in pellets to make a negative electrode layer, and placing it on a collector.

### 2) Positive electrode

The positive electrode includes a collector and a positive electrode layer (positive electrode active material-containing layer). The positive electrode layer is formed on one or both sides of the collector, and includes an active material, and optionally a conductive agent and a binder.

The active material may be, for example, an oxide or sulfide. Examples of the oxide and sulfide include manganese dioxide (MnO₂) occluding lithium, iron oxide, copper oxide, nickel oxide, lithium manganese complex oxides (e.g., LiₓMn₂O₄ or LiₓMnO₂), lithium nickel complex oxides (e.g., LiₓNiO₂), lithium cobalt complex oxides (e.g., LiₓCoO₂), lithium nickel cobalt complex oxides (e.g., LiNi_{1-y}Co_{y}O₂), lithium manganese cobalt complex oxides (e.g., LiₓMn_{y}Co_{1-y}O₂), spinel lithium manganese nickel complex oxides (e.g., LiₓMn_{2-y}Ni_{y}O₄), olivine lithium phosphorus oxides (e.g., LiₓFePO₄, LiₓFe_{1-y}Mn_{y}PO₄, and LiₓCoPO₄), iron sulfate [Fe₂(SO₄)₃], vanadium oxides (e.g., V₂O₅), and lithium nickel cobalt manganese complex oxides. In the above-described formula, 0 < x ≤ 1, and 0 < y ≤ 1. As the active material, any of these compounds may be used singly, or in combination of two or more of the compounds.

More preferred examples of the active material include lithium manganese complex oxides having a high positive electrode voltage (e.g., LiₓMn₂O₄), lithium nickel complex oxides (e.g., LiₓNiO₂), lithium cobalt complex oxides (e.g., LiₓCoO₂), lithium nickel cobalt complex oxides (e.g., LiNi_{1-y}Co_{y}O₂), spinel lithium manganese nickel complex oxides (e.g., LiₓMn_{2-y}Ni_{y}O₄), lithium manganese cobalt complex oxides (e.g., LiₓMn_{y}Co_{1-y}O₂), lithium iron phosphates (e.g., LiₓFePO₄), and lithium nickel cobalt manganese complex oxides. In the above-described formula, 0 < x ≤ 1, and 0 < y ≤ 1.

When an ordinary temperature molten salt is used as the nonaqueous electrolyte of the battery, preferred examples of the active material include lithium iron phosphate, LiₓVPO₄F (0 ≤ x ≤ 1), lithium manganese complex oxides, lithium nickel complex oxides, and lithium nickel cobalt complex oxides. Since these compounds have low reactivity for ordinary temperature molten salts, they can improve the cycle life.

The primary particle size of the positive electrode active material is preferably 100 nm or more and 1 µm or less. The positive electrode active material having a primary particle size of 100 nm or more is easy to handle during industrial production. The positive electrode active material having a primary particle size of 1 µm or less can smoothly diffuses lithium ions within the solid.

The specific surface area of the active material is preferably 0.1 m²/g or more and 10 m²/g or less. The positive electrode active material having a specific surface area of 0.1 m²/g or more secures sufficient occlusion and discharge sites for lithium ions. The positive electrode active material having a specific surface area of 10 m²/g or less is easy to handle during industrial production, and achieves good charge and discharge cycle performance.

The binder is added for binding the active material with the collector. Examples of the binder include polytetrafluoroethylene (PTFE), polyvinylidene fluoride (PVdF), and fluorine rubber.

The conductive agent is as necessary added for improving the current collection performance, and suppressing the contact resistance between the active material and collector. Examples of the conductive agent include carbonaceous substances such as acetylene black, carbon black and graphite.

In the positive electrode layer, the contents of the active material and binder are preferably 80% by mass or more and 98% by mass or less, and 2% by mass or more and 20% by mass or less, respectively.

When the binder content is 2% by mass or more, sufficient electrode strength is achieved. When the binder content is 20% by mass or less, the loading of the insulator in the electrode can be reduced, whereby the internal resistance is decreased.

When a conductive agent is added, the contents of the active material, binder, and conductive agent are preferably 77% by mass or more and 95% by mass or less, 2% by mass or more and 20% by mass or less, and 3% by mass or more and 15% by mass or less, respectively. When the content of the conductive agent is 3% by mass or more, the above-described effects will be achieved. When the content of the conductive agent is 15% by mass or less, the decomposition of the nonaqueous electrolyte on the surface of the positive electrode conductive agent during high temperature storage can be reduced.

The collector is preferably aluminum foil, or aluminum alloy foil containing one or more elements selected from Mg, Ti, Zn, Ni, Cr, Mn, Fe, Cu, and Si.

The thickness of the aluminum foil or aluminum alloy foil is preferably 5 µm or more and 20 µm or less, and more preferably 15 µm or less. The purity of the aluminum foil is preferably 99% by mass or more. The content of the transition metal such as iron, copper, nickel, or chromium contained in the aluminum foil or aluminum alloy foil is preferably 1% by mass or less.

The positive electrode is made by, for example, suspending an active material, a binder, and as necessary a conductive agent in an appropriate solvent to prepare a slurry, applying the slurry to a positive electrode collector, drying the coating to form a positive electrode layer, and then pressing the layer. Alternatively, the positive electrode may be made by forming an active material, a binder, and as necessary a conductive agent into pellets to make a positive electrode layer, and placing it on a collector.

### 3) Nonaqueous electrolyte

Examples of the nonaqueous electrolyte include a liquid nonaqueous electrolyte which is prepared by dissolving an electrolyte in an organic solvent, and a gelatinous nonaqueous electrolyte composed of a liquid state electrolyte and a polymer material.

The liquid nonaqueous electrolyte is preferably prepared by dissolving an electrolyte in an organic solvent at a concentration of 0.5 mol/L or more and 2.5 mol/L or less.

Examples of the electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluorometasulfonate (LiCF₃SO₃), and lithium bistrifluoromethylsulfonylimide (LiN(CF₃SO₂)₂], and mixtures thereof. The electrolyte is preferably resistant to oxidation even at a high potential, and is most preferably LiPF₆.

Examples of the organic solvent include cyclic carbonates such as propylene carbonate (PC), ethylene carbonate (EC), and vinylene carbonate; chain carbonates such as diethyl carbonate (DEC), dimethylcarbonate (DMC), and methylethyl carbonate (MEC); cyclic ethers such as tetrahydrofuran (THF), 2-methyltetrahydrofuran (2-MeTHF), and dioxolane (DOX); chain ethers such as dimethoxyethane (DME) and diethoxyethane (DEE); γ-butyrolactone (GBL), acetonitrile (AN), and sulfolane (SL). These organic solvents may be used singly, or in the form of a mixed solvent.

Examples of the polymer material include polyvinylidene fluoride (PVdF), polyacrylonitrile (PAN), and polyethylene oxide (PEO).

Alternatively, the nonaqueous electrolyte may be, for example, an ordinary temperature molten salt (ionic melt) containing lithium ions, a polymer solid electrolyte, or an inorganic solid electrolyte.

The ordinary temperature molten salt (ionic melt) means the compound which is an organic salt composed of an organic cation and an organic anion, and can exist as a liquid by itself at normal temperature (15 to 25°C). Examples of the ordinary temperature molten salt include an ordinary temperature molten salt which can exist as a liquid by itself, an ordinary temperature molten salt which turns a liquid when mixed with an electrolyte, and an ordinary temperature molten salt which turns a liquid when dissolved in an organic solvent. In general, the melting point of the ordinary temperature molten salt included in a nonaqueous electrolyte battery is 25°C or lower. In general, an organic substance cation has a quaternary ammonium skeleton.

The polymer solid electrolyte is prepared by dissolving the electrolyte in a polymer material, and solidifying it.

The inorganic solid electrolyte is a solid substance having lithium ion conductivity.

### 4) Separator

The separator is made of, for example, a porous film or synthetic resin nonwoven fabric containing polyethylene, polypropylene, cellulose, or polyvinylidene fluoride (PVdF). Among them, the porous film made from polyethylene or polypropylene can be molten at a certain temperature to block the current, and thus can improve safety.

### 5) Exterior member

The exterior member may be laminate film having a thickness of 0.5 mm or less, or a metal container having a thickness of 1 mm or less. The thickness of the laminate film is more preferably 0.2 mm or less. The thickness of the metal container is more preferably 0.5 mm or less, and even more preferably 0.2 mm or less.

The shape of the exterior member may be, for example, flat (thin), square, cylinder, coin, or button. The exterior member depends on the size of the battery, and examples include those for a compact battery mounted on mobile electronic devices, and a large battery mounted on two- to four-wheel automobiles.

The laminate film used herein is a multilayer film composed of a metal layer sandwiched between resin film layers. The metal layer is preferably aluminum foil or aluminum alloy foil, thereby reducing the weight. The resin film may be, for example, a polymer material such as polypropylene (PP), polyethylene (PE), nylon, or polyethylene terephthalate (PET). The laminate film may be heat-sealed to be formed into the shape of an exterior member.

The metal container is made of aluminum or an aluminum alloy. The aluminum alloy preferably contains an element such as magnesium, zinc, or silicon. When the alloy contains a transition metal such as iron, copper, nickel, or chromium, its content is preferably 1% by mass or less.

### 6) Nonaqueous electrolyte secondary battery

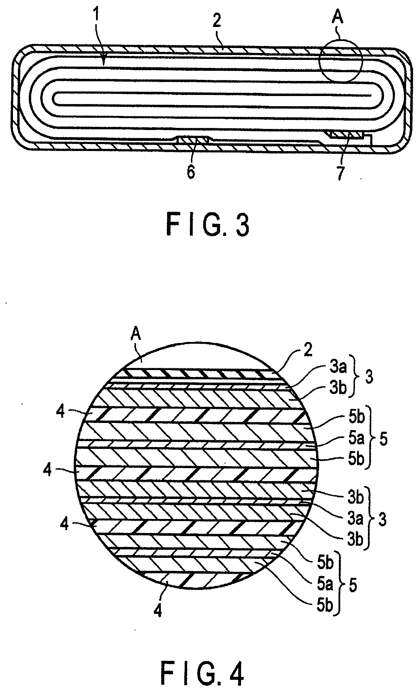

The nonaqueous electrolyte battery according to the second embodiment is more specifically described with reference to drawings. FIG. 3 is a cross sectional view of a flat nonaqueous electrolyte secondary battery. FIG. 4 is an enlarged cross sectional view showing the part indicated with A in FIG. 3. The following figures show schematic views for helping the explanation and understanding of the embodiments. The shape, dimension, and ratio may be different from those in an actual apparatus, and may be designed and changed in consideration of the following explanations and known techniques.

A wound electrode group 1 in a flat form is housed in an exterior member 2 in a bag form made of laminate film composed of a metal layer sandwiched between two resin layers. The wound electrode group 1 in a flat form is formed by, as shown in FIG. 4, spiraling a laminate which includes, from the outside to the inside, a negative electrode 3, a separator 4, a positive electrode 5, and a separator 4, and then press-forming the spiral.

The negative electrode 3 includes a negative electrode collector 3a and a negative electrode layer 3b. The negative electrode layer 3b contains the above-described negative electrode active material. The negative electrode 3 in the outermost shell has a structure as shown in FIG. 4, which includes a negative electrode layer 3b formed only the inside surface of the negative electrode collector 3a. In the other negative electrode 3, negative electrode layers 3b are formed on both sides of the negative electrode collector 3a.

A positive electrode 5 includes a positive electrode collector 5a and positive electrode layers 5b formed on both sides of the positive electrode collector 5a.

As shown in FIG. 3, near the outer peripheral edge of the wound electrode group 1, a negative terminal 6 is connected to the negative electrode collector 3a in the outermost negative electrode 3, and a positive terminal 7 is connected to the positive electrode collector 5a in the inside positive electrode 5. These negative terminal 6 and positive terminal 7 are extended out from the opening of the exterior member 2 in a bag form. For example, a liquid nonaqueous electrolyte is injected from the opening of the exterior member 2 in a bag form. The opening of the exterior member 2 in a bag form is heat-sealed with the negative terminal 6 and positive terminal 7 sandwiched therebetween, whereby the wound electrode group 1 and the liquid state nonaqueous electrolyte are completely sealed.

The negative terminal 6 may be made of a material which is electrochemically stable at the potential at which the negative electrode active material occludes and discharges Li, and has electrical conductivity. Specific examples of the material include copper, nickel, stainless steel, and aluminum. The negative terminal 6 is preferably made of the same material as the negative electrode collector 3a, thereby reducing contact resistance to the negative electrode collector 3a.

The positive terminal 7 may be made of, for example, a material which is electrically stable and has and electrical conductivity in the potential range of 3 V or more and 5 V or less for the lithium ion metal. Specific examples of the material include aluminum and aluminum alloys containing Mg, Ti, Zn, Mn, Fe, Cu, Si, or other element. The positive terminal 7 is preferably made of the same material as the positive electrode collector 5a, thereby reducing contact resistance to the positive electrode collector 5a.

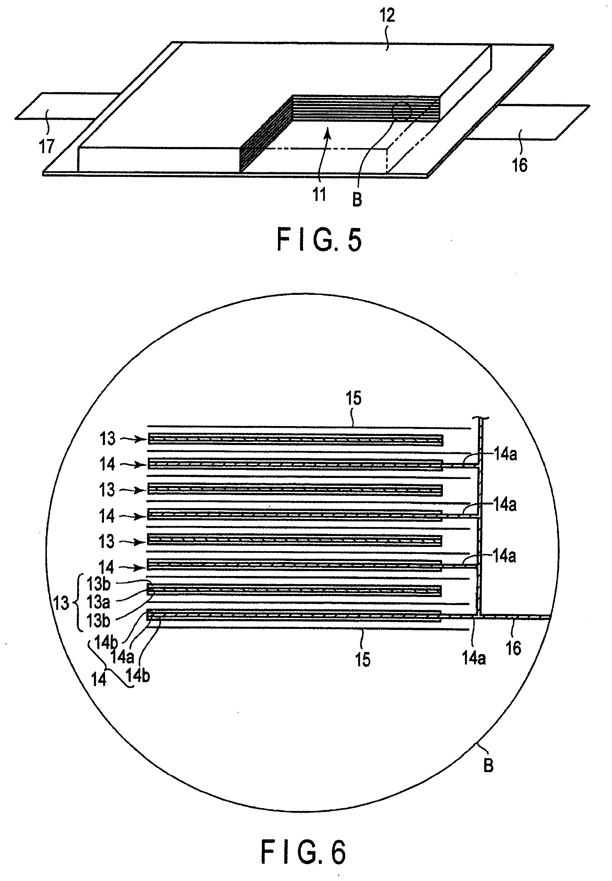

The nonaqueous electrolyte battery according to the second embodiment is not limited to the structure shown in FIGS. 3 and 4, and may be, for example, a battery having the structure shown in FIGS. 5 and 6. FIG. 5 is a partially cutaway perspective view schematically showing the other flat nonaqueous electrolyte battery according to the second embodiment, and FIG. 6 is an enlarged cross sectional view showing the part indicated with B in FIG. 5.

A laminated electrode group 11 is housed in an exterior member 12 made of laminate film including a metal layer sandwiched between two layers of resin film. The laminated electrode group 11 has a laminated structure as shown in FIG. 6, which is composed of alternately stacked units each including a positive electrode 13, a negative electrode 14, and a separator 15 sandwiched between the positive electrode 13 and negative electrode 14. The positive electrode 13 is present in plurally, and each of them includes a collector 13a, and a positive electrode active material-containing layer 13b supported on the both sides of the collector 13a. The negative electrode 14 is present plurally, and each of them includes a negative electrode collector 14a, and a negative electrode active material-containing layer 14b supported on the both sides of the negative electrode collector 14a. The negative electrode collector 14a of each of the negative electrode 14 protrudes at one side from the negative electrode 14. The protruded negative electrode collector 14a is electrically connected to a negative terminal 16 in a strip form. The end of the negative terminal 16 in a strip form is extended out from the exterior member 11. In addition, not shown, the positive electrode collector 13a of the positive electrode 13 protrudes from the positive electrode 13 at the side opposed to the protruded side of the negative electrode collector 14a. The positive electrode collector 13a protruded from the positive electrode 13 is electrically connected to a positive terminal 17 in a strip form. The end of the positive terminal 17 in a strip form is opposed to the negative terminal 16, and extended out from a side of the exterior member 11.

According to the above embodiment, a nonaqueous electrolyte battery which achieves marked repeated quick charge and discharge performance, and has a high energy density is provided.

### (Third embodiment)

Subsequently, a battery pack according to the third embodiment is described below with reference to drawings. The battery pack has one or more nonaqueous electrolyte batteries (single cells) according to the second embodiment. When it includes multiple single cells, the single cells are electrically connected in series or parallel.

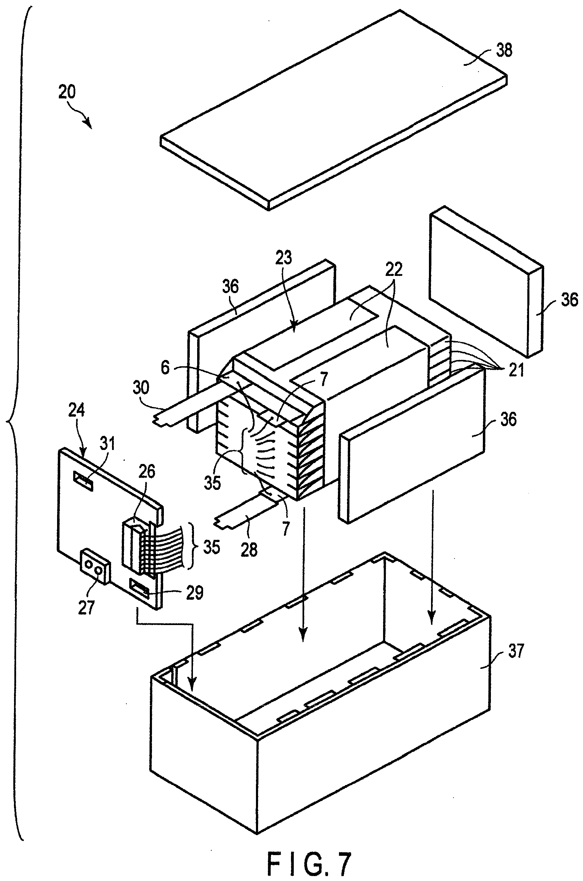

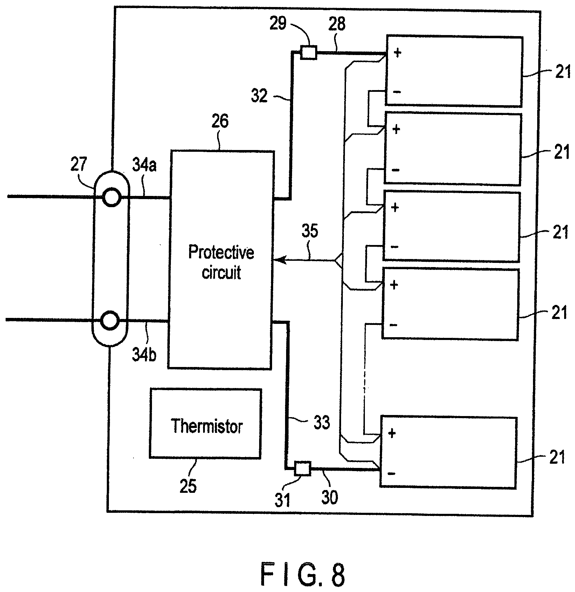

FIGS. 7 and 8 show an example of a battery pack 20. The battery pack 20 includes multiple flat batteries 21 having the structure shown in FIG. 3. FIG. 7 is an exploded perspective view of the battery pack 20, and FIG. 8 is a block diagram showing the electric circuit of the battery pack 20 of FIG. 7.

The multiple single cells 21 compose a battery pack 23, wherein the negative terminals 6 and positive terminals 7 extending out are laminated in the same direction, and bound together by an adhesive tape 22. These single cells 21 are electrically and serially connected to each other as shown in FIG. 8.

A printed circuit board 24 is opposed to a side surface of the single cells 21 from which the negative terminal 6 and positive terminal 7 are extended. On the printed circuit board 24, as shown in FIG. 8, a thermistor 25, a protective circuit 26, and a terminal 27 for passing a current to the external device. An insulating plate (not shown) is mounted on the printed circuit board 24 on the side opposed to the battery pack 23, thereby avoiding unnecessary connection to the wiring of the battery pack 23.

A positive electrode lead 28 is connected to the positive terminal 7 located in the lowest layer of the battery pack 23, and the end is inserted into and electrically connected to a positive electrode connector 29 on the printed circuit board 24. A negative electrode lead 30 is connected to the negative terminal 6 located in the uppermost layer of the battery pack 23, and the end is inserted into and electrically connected to the negative electrode connector 31 on the printed circuit board 24. These connectors 29 and 31 are connected to the protective circuit 26 through the wiring 32 and 33 formed on the printed circuit board 24.

The thermistor 25 detects the temperature of the single cells 21, and the detection signal is sent to the protective circuit 26. The protective circuit 26 breaks the positive side wiring 34a and the negative side wiring 34b between the protective circuit 26 and the terminal 27 for passing a current to the external device under predetermined conditions. The predetermined conditions are satisfied when, for example, the detection temperature of the thermistor 25 reaches the predetermined temperature. In addition, the predetermined conditions are satisfied when overcharge, overdischarge, or overcurrent in a single cell 21 is detected. The detection of the overcharge or the like is carried out for each of the respective single cells 21 or the whole of the single cells 21. When each of the single cells 21 is detected, the battery voltage may be detected, or the positive or negative electrode potential may be detected. In the latter case, a lithium electrode used as a reference electrode is inserted into each of the single cells 21. In the case shown in FIGS. 7 and 8, wiring 35 for voltage detection is connected to each of the single cells 21, and the detection signal is sent to the protective circuit 26 through the wiring 35.

A protective sheet 36 made of rubber or resin is placed on each of the three side surfaces of the battery pack 23 excluding the side surface from which the positive terminal 7 and negative terminal 6 are protruded.

The battery pack 23 is housed in a container 37 together with the protective sheet 36 and printed circuit board 24. More specifically, the protective sheets 36 are placed on the both inside surfaces in a long side direction and one inside surface in a short side direction of the container 37, and the printed circuit board 24 is placed on the opposite inside surface in a short side direction. The battery pack 23 is located in the space surrounded by the protective sheets 36 and the printed circuit board 24. A lid 38 is mounted on the top surface of the container 37.

The fixation of the battery pack 23 may use a heat-shrinkable tube in place of the adhesive tape 22. In this case, protective sheets are placed on the both sides of the battery pack, the heat-shrinkage tube is placed around them, and the heat-shrinkable tube is heat-shrunk to bind the battery pack.

In FIGS. 7 and 8, the single cells 21 are connected in series. Alternatively, they may be connected in parallel, thereby increasing the battery capacity. Alternatively, serial and parallel connections may be combined. The assembled battery pack may be further connected in series or parallel.

The embodiment of the battery pack is altered as needed according to the intended use. The battery pack according to the present embodiment is suitable for the applications where marked cycling characteristics are required during drawing a large current. Specifically, the battery pack is suitable as a power source for digital cameras, or an on-vehicle battery for two- to four-sheet hybrid electric vehicles, two- to four-wheel electric vehicles, and electrically assisted pedal cycles. In particular, the battery pack is suitable as an on-vehicle battery.

According to the above embodiments, a battery pack which achieves marked repeated quick charge and discharge performance, and has a high energy density is provided.

### EXAMPLES

The above-described embodiment is described below in more detail based on examples. Identification of the crystal phase of the synthesized monoclinic complex oxide and estimation of the crystal structure were carried out by powder x-ray diffractometry using a Cu-Kα line. In addition, the constitution of the product was analyzed by the ICP method, and the acquisition of the intended product was confirmed.

### <Synthesis Example 1>

### (Synthetic method)

Of the monoclinic complex oxides expressed by the general formula LiₓM1M2₂O_{(7±δ)} (0 ≤ x ≤ 5, 0 ≤ δ ≤ 0.3), TiNb₂O₇ wherein x = 0, M1 = Ti, and M2 = Nb was synthesized.

The raw material compounds were commercially available oxide reagents Nb₂O₅ and TiO₂. These raw material oxides were weighed to give a molar ratio of 1 : 1, and mixed in a mortar. Subsequently, the mixture was placed in an electric furnace, calcined at 800°C for 12 hours, and then sintered at 1400°C for 20 hours in total. After cooling to room temperature, the object was placed again in the electric furnace, and annealed at 600°C for 6 hours.

### (Powder x-ray diffractometry)

The sample thus obtained was subjected to powder x-ray diffractometry as follows. Firstly, the object sample was pulverized to have an average particle size of less than 5 µm. The particle size distribution in this example was measured using a laser diffractometer (Nikkiso MicroTrack Series MT3300, by reflection method with ultrasonic irradiation). The pulverized sample was charged into the holder part having a depth of 0.2 mm formed on a glass sample plate. Subsequently, another glass plate was thoroughly pressed against the surface of the sample for smoothening the surface. Subsequently, the glass plate filled with the sample was mounted on a powder x-ray diffraction apparatus, and the diffraction pattern was obtained using a Cu-Kα line. Firstly, in order to establish the measurement conditions, measurement was carried out by the continuous method at an X-ray output of 40 kV, 100 mA, and a scan speed of 3 deg/min. As a result of this, the minimum half width was 0.15 deg, and one-fifth the value, or 0.03 deg was decided as the step width. Subsequently, main measurement was carried out by the FT method, and the measuring time at each step was decided so as to make the intensity of the main peak 10,000 counts. The measured XRD data was subjected to Rietveld analysis, thereby determining the site occupancy of Nb and Ti.

Table 1 shows the initial values of the atomic coordinates in the metal-occupied sites M(1) to M(5) occupied by the M1 and M2 used for analysis. Table 2 shows the M1 and M2 occupancies in the respective metal-occupied sites obtained by the result of Rietveld analysis.

**[Table 1]**

| Site | Wyckofr notation | x | y | z |
|---|---|---|---|---|
| M (1) | 2 (a) | 0 | 0 | 0 |
| M (2) | 4 (i) | 0.1856 | 0 | 0.006 |
| M (3) | 4 (i) | 0.0786 | 0 | 0.6368 |
| M (4) | 4 (i) | 0.8889 | 0 | 0.6307 |
| M (5) | 4 (i) | 0.2931 | 0 | 0.3976 |
| O (1) | 4 (i) | 0.1738 | 0 | 0.5859 |
| O (2) | 4 (i) | 0.373 | 0 | 0.58 |
| O (3) | 4 (i) | 0.5967 | 0 | 0.621 |
| O (4) | 4 (i) | 0.7909 | 0 | 0.6188 |
| O (5) | 4 (i) | 0.2508 | 0 | 0.1973 |
| O (6) | 4 (i) | 0.7094 | 0 | 0.0022 |
| O (7) | 4 (i) | 0.8896 | 0 | 0.9863 |
| O (8) | 4 (i) | 0.025 | 0 | 0.4188 |
| O (9) | 4 (i) | 0.8753 | 0 | 0.1885 |
| O (10) | 2 (b) | 0.5 | 0 | 0 |
| O (11) | 4 (i) | 0.0495 | 0 | 0.1979 |
| Lattice constant *a*=2035 pm, *b*=380.1 pm, *c*=1188 pm, β=120.19 deg | | | | |

**[Table 2]**

| Site | Wyckofr notation | M1 occupancy | M2 occupancy |
|---|---|---|---|
| M (1) | 2 (a) | 0.186±0.04 | 0.814±0.04 |
| M (2) | 4 (i) | 0.182±0.04 | 0.818±0.04 |
| M (3) | 4 (i) | 0.287±0.05 | 0.713±0.05 |
| M (4) | 4 (i) | 0.281±0.05 | 0.719±0.05 |
| M (5) | 4 (i) | 0.653±0.06 | 0.347±0.06 |

These results indicate that M2 or Nb is rich in the M(1) and M(2), and M2 is slightly richer in the M(3) and M(4), so the ratio M1 : M2 is far from the common ratio 1 : 2, and M1 or Ti is rich in the M(5). These facts have revealed the maldistribution of M1 and M2.

Of these analysis results, as the typical site in which maldistribution of M2 is apparent, the occupancies of the elements in the M(1) site or the 2a site are summarized in Table 4. As shown in Table 4, in Synthesis Example 1, M1 = Ti was 0.186 ± 0.04 and M2 = Nb was 0.814 ± 0.04, which are remarkably far from the ranges M1 = 0.33 ± 0.03 and M2 = 0.667 ± 0.03, which are the expected values for random arrangements. These facts indicate that Nb and Ti are maldistributed in the sites of the monoclinic complex oxide obtained in Synthesis Example 1. The fitting parameter obtained herein was S = 1.33 and σⱼ = 0.03, so that the result obtained from the occupancies in the site is considered sufficiently significant.

### (Electrochemical measurement)

The monoclinic complex oxide synthesized above was mixed with acetylene black as the conductive agent in the ratio of 100 : 10 parts by weight. The mixture was dispersed in NMP (N-methyl-2-pyrrolidone), and mixed with polyvinylidene fluoride (PVdF) as the binder in the ratio of 100 parts by weight of the oxide to 10 parts by weight of the PVdf, and thus making an electrode slurry. The slurry was applied using a blade to a collector composed of aluminum foil. This object was dried at 130°C for 12 hours under vacuum, and thus obtaining an electrode.

Using this electrode, a counter electrode which was composed of metal lithium foil and a nonaqueous electrolyte, an electrochemical measurement cell was made. The nonaqueous electrolyte was a 1 M solution of lithium hexafluorophosphate in a mixed solvent of ethylene carbonate and diethyl carbonate (capacity ratio 1 : 1). Thereafter, charge and discharge were carried out in the potential range of 1.0 V to 3.0 V with reference to the metal lithium electrode. The charge and discharge current value was 0.2 C (time discharge rate), and the charge and discharge test was carried out at room temperature.

Subsequently, in order to confirm whether the negative electrode active material can be stably charged and discharged, an electrochemical measurement cell was subjected to 50 cycles of charge and discharge (a cycle is composed of one charge and one discharge), and the discharge capacity retention rate after 50 cycles was determined. The charge and discharge were carried out at room temperature in the potential range of 1.0 V to 3.0 V with reference to the metal lithium electrode, at the current value of 1 C (time discharge rate). In order to confirm the discharge capacity retention rate after the 50 cycles, charge and discharge were carried out again at 0.2 C (time discharge rate), and the capacity retention rate was calculated with the initial discharge capacity as 100%. In addition, as the index of the rate performance, the ratio of the 0.2 C discharge capacity to the 1.0 C discharge capacity was calculated.

Table 3 summarizes the XRD main peak position, average particle size, BET specific surface area, and the type of the conductive aid to make the electrode. Table 4 shows the other electrochemical properties.

### <Synthesis Example 2>

### (Synthetic method)

Of the monoclinic complex oxides expressed by the general formula LiₓM1M2₂O_{(7±δ)} (0 ≤ x ≤ 5, 0 ≤ δ ≤ 0.3), TiNb₂O₇ wherein x = 0, M1 = Ti, and M2 = Nb was synthesized.

The raw material compounds were commercially available oxide reagents, Nb₂O₅ and TiO₂. These raw material oxides were weighed to give a molar ratio of 1 : 1, and mixed in a mortar. Subsequently, the mixture was placed in an electric furnace, calcined at 800°C for 12 hours, and then sintered at 1100°C for 20 hours in total. After cooling to room temperature, the object was placed again in an electric furnace, and subjected to heat treatment at 600°C for 6 hours. Subsequently, the precursor powder thus obtained was coated with carbon. The powder was stirred in an aqueous solution containing 30% by weight of sucrose with reference to the powder amount, the mixture was overheated to evaporate moisture, then heated at 600°C for 5 hours in an Ar atmosphere, and thus obtaining a carbon-coated powder. In order to measure the amount of carbon coating, the powder was heated at 1000°C for 5 hours in the air to decompose carbon, and the amount of carbon coating was calculated from the difference in the weight before and after heating; the amount of carbon coating was 8.02% by weight.

### (Powder x-ray diffractometry)

The sample thus obtained was subjected to powder x-ray diffractometry and Rietveld analysis in the same manner as in Synthesis Example 1. As a result of this, as shown in Table 4, the occupancy rate of the respective elements in the 2a site were 0.191 ± 0.04 for M1 = Ti, and 0.809 ± 0.04 for M2 = Nb, indicating that Nb and Ti are maldistributed in the site. The fitting parameter obtained herein is S = 1.65 and σⱼ = 0.03, so that the result obtained from the occupancies in the site is considered sufficiently significant.

### (Electrochemical measurement)

100 parts by weight the monoclinic complex oxide synthesized above were mixed with 5 parts by weight of acetylene black as the conductive agent. The mixture was dispersed in NMP (N-methyl-2-pyrrolidone), and the oxide was mixed with polyvinylidene fluoride (PVdF) as the binder in the ratio of 100 : 10 parts by weight, and thus making an electrode slurry. The slurry was applied using a blade to a collector composed of aluminum foil. This object was dried at 130°C for 12 hours under vacuum, and thus obtaining an electrode. The other measurement method was carried out in the same manner as in Synthesis Example 1. The measurement results are shown in Table 4.

### <Synthesis Examples 3 to 5>

### (Synthetic method)

Of the monoclinic complex oxides expressed by the general formula LiₓM1M2₂O_{(7±δ)} (0 ≤ x ≤ 5, 0 ≤ δ ≤ 0.3), Ti_{0.98}Zr_{0.02}Nb₂O₇ wherein x = 0, M1 = Ti_{0.98}Zr_{0.02}, and M2 = Nb was synthesized (Synthesis Example 3). In addition, Ti_{0.98}Si_{0.02}Nb₂O₇ wherein x = 0, M1 = Ti_{0.98}Si_{0.02}, and M2 = Nb was synthesized (Synthesis Example 4). Furthermore, Ti_{0.98}Sn_{0.02}Nb₂O₇ wherein x = 0, M1 = Ti_{0.98}Sn_{0.02}, and M2 = Nb was synthesized (Synthesis Example 5).

The raw material compounds of Synthesis Example 3 were commercially available oxide reagents, Nb₂O₅, TiO₂, and ZrO₂. These raw material oxides were weighed to give the ratio composing the intended Ti_{0.98}Zr_{0.02}Nb₂O₇, and mixed in a mortar. Subsequently, the mixture was placed in an electric furnace, calcined at 800°C for 12 hours, and then sintered at 1100°C for 20 hours in total. After cooling to room temperature, the object was placed again in an electric furnace, and subjected to heat treatment at 600°C for 6 hours.

The raw material compounds of Synthesis Example 4 were commercially available oxide reagents Nb₂O₅, TiO₂, and SiO₂. These raw material oxides were weighed to give the ratio composing the intended Ti_{0.98}Si_{0.02}NbO₇, and mixed in a mortar. Subsequently, the mixture was placed in an electric furnace, calcined at 800°C for 12 hours, and then sintered at 1100°C for 20 hours in total. After cooling to room temperature, the object was placed again in an electric furnace, and subjected to heat treatment at 600°C for 6 hours.

The raw material compounds of Synthesis Example 5 were commercially available oxide reagents Nb₂O₅, TiO₂, and SnO₂. These raw material oxides were weighed to give the ratio composing the intended Ti_{0.98}Sn_{0.02}Nb₂O₇, and mixed in a mortar. Subsequently, the mixture was placed in an electric furnace, calcined at 800°C for 12 hours, and then sintered at 1100°C for 20 hours in total. After cooling to room temperature, the object was placed again in an electric furnace, and subjected to heat treatment at 600°C for 6 hours.

### (Powder x-ray diffractometry)

The sample thus obtained was subjected to powder x-ray diffractometry and Rietveld analysis in the same manner as in Synthesis Example 1. The occupancies of the respective elements in the 2a site in Synthesis Example 3 were 0.156 ± 0.03 for M1 = Ti_{0.98}Zr_{0.02}, and 0.844 ± 0.03 for M2 = Nb, indicating that M1 and M2 are maldistributed in the site. The fitting parameter obtained herein was S = 1.46 and σⱼ = 0.03. The occupancies of the respective elements in the 2a site in Synthesis Example 4 were 0.159 ± 0.03 for M1 = Ti_{0.98}Si_{0.02}, and 0.841 ± 0.03 for M2 = Nb, indicating that M1 and M2 are maldistributed also in this site. The fitting parameter obtained herein was S = 1.56 and σⱼ = 0.03. The occupancies of the respective elements in the 2a site in Synthesis Example 5 were 0.153 ± 0.03 for M1 = Ti_{0.98}Sn_{0.2}, and 0.847 ± 0.03 for M2 = Nb, indicating that M1 and M2 are maldistributed also in this site. The fitting parameter obtained herein was S = 1.36 and σⱼ = 0.03. These fitting parameters suggest that the results obtained from the occupancies in these sites are considered sufficiently significant.

### (Electrochemical measurement)

Measurement was carried out in the same manner as in Synthesis Example 1. The measurement results are shown in Table 4.

### <Synthesis Example 6 and 7>

### (Synthetic method)

Of the monoclinic complex oxides expressed by the general formula LiₓM1M2₂O_{(7±δ)} (0 ≤ x ≤ 5, 0 ≤ δ ≤ 0.3), TiNb_{1.95}V_{0.05}O₇ wherein x = 0, M1 = Ti, and M2 = Nb_{1.95}V_{0.05} was synthesized (Synthesis Example 6). In addition, TiNb_{1.95}Ta_{0.05}O₇ wherein x = 0, M1 = Ti, and M2 = Nb_{1.95}Ta_{0.05} was synthesized (Synthesis Example 7).

The raw material compounds of Synthesis Example 6 were commercially available oxide reagents, Nb₂O₅, TiO₂, and V₂O₅. These raw material oxides were weighed to give the intended composition ratio of TiNb_{1.95}V_{0.05}O₇, and mixed in a mortar. Subsequently, the mixture was placed in an electric furnace, calcined at 800°C for 12 hours, and then sintered at 1100°C for 20 hours in total. After cooling to room temperature, the object was placed again in an electric furnace, and subjected to heat treatment at 600°C for 6 hours.

The raw material compounds of Synthesis Example 7 were commercially available oxide reagents, Nb₂O₅, TiO₂, and Ta₂O₅. These raw material oxides were weighed to give the ratio composing the intended TiNb_{1.95}Ta_{0.05}O₇, and mixed in a mortar. Subsequently, the mixture was placed in an electric furnace, calcined at 800°C for 12 hours, and then sintere at 1100°C for 20 hours in total. After cooling to room temperature, the object was placed again in an electric furnace, and subjected to heat treatment at 600°C for 6 hours.

### (Powder x-ray diffractometry)

The sample thus obtained was subjected to powder x-ray diffractometry and Rietveld analysis in the same manner as in Synthesis Example 1. As a result of this, the occupancies of the respective elements in the 2a site in Synthesis Example 6 were 0.179 ± 0.04 for M1 = Ti, and 0.821 ± 0.04 for M2 = Nb_{1.95}V_{0.05}, indicating that M1 and M2 are maldistributed in the site. The fitting parameter obtained herein was S = 1.51 and σⱼ = 0.04. In Synthesis Example 7, 0.175 ± 0.04 for M1 = Ti, and 0.825 ± 0.04 for M2 = Nb_{1.95}Ta_{0.05}, indicating that M1 and M2 are maldistributed also in this site. The fitting parameter obtained herein was S = 1.45 and σⱼ = 0.04. These fitting parameters suggest that the results obtained from the occupancies in these sites are considered sufficiently significant.

### (Electrochemical measurement)

Measurement was carried out in the same manner as in Synthesis Example 1. The measurement results are shown in Table 4.

### <Synthesis Example 8>

Of the monoclinic complex oxides expressed by the general formula LiₓM1M2₂O_{(7±δ)} (0 ≤ x ≤ 5, 0 ≤ δ ≤ 0.3), Li_{0.2}TiNb_{1.8}Bi_{0.2}O₇ wherein x = 0.2, M1 = Ti, and M2 = Nb_{1.8}Bi_{0.2} was synthesized.

The raw material compounds were commercially available oxide reagents Nb₂O₅ and TiO₂. In addition, LiBiO₃ containing pentavalent Bi was synthesized in advance using lithium nitrate and bismuth nitrate, and used as the Li and Bi source. These raw material oxides were weighed to give the ratio composing the intended Li_{0.2}TiNb_{1.8}Bi_{0.2}O₇, and mixed in a mortar. Subsequently, the mixture was placed in an electric furnace, calcined at 800°C for 12 hours, and then sintered at 1100°C for 20 hours in total. After cooling to room temperature, the object was placed again in the electric furnace, and annealed at 600°C for 6 hours.

### (Powder x-ray diffractometry)

The sample thus obtained was subjected to powder x-ray diffractometry and Rietveld analysis in the same manner as in Synthesis Example 1. As a result of this, the occupancy rate of the respective elements in the 2a site were 0.190 ± 0.05 for M1 = Ti, and 0.810 ± 0.05 for M2 = Nb_{1.95}V_{0.05}, indicating that M1 and M2 are maldistributed also in this site. The fitting parameter obtained herein is S = 1.55 and σⱼ = 0.05, so that the result obtained from the occupancies in the site is considered sufficiently significant.

### (Electrochemical measurement)

Measurement was carried out in the same manner as in Synthesis Example 1. The measurement results are shown in Table 4.

### <Synthesis Example 9>

Of the monoclinic complex oxides expressed by the general formula LiₓM1M2₂O_{(7±δ)} (0 ≤ x ≤ 5, 0 ≤ δ ≤ 0.3), Ti_{1.05}Nb_{1.9}Mo_{0.05}O₇ wherein x = 0, M1 = Ti, and M2 = Nb_{1.9}Ti_{0.05}Mo_{0.05} was synthesized.

The raw material compounds were commercially available oxide reagents Nb₂O₅, TiO₂, and MoO₃. These raw material oxides were weighed to give the ratio composing the intended Ti_{1.05}Nb_{1.9}Mo_{0.05}O₇, and mixed in a mortar. Subsequently, the mixture was placed in an electric furnace, calcined at 800°C for 12 hours, and then sintered at 1100°C for 20 hours in total. After cooling to room temperature, the object was placed again in the electric furnace, and annealed at 600°C for 6 hours.

### (Powder x-ray diffractometry)

The sample thus obtained was subjected to powder x-ray diffractometry and Rietveld analysis in the same manner as in Synthesis Example 1. As a result of this, the occupancy rate of the respective elements in the 2a site were 0.188 ± 0.05 for M1 = Ti, and 0.812 ± 0.05 for M2 = Nb_{1.9}Ti_{0.05}Mo_{0.05}, indicating that M1 and M2 are maldistributed also in this site. The fitting parameter obtained herein is S = 1.55 and σⱼ = 0.05, so that the result obtained from the occupancies in the site is considered sufficiently significant.

### (Electrochemical measurement)

Measurement was carried out in the same manner as in Synthesis Example 1. The measurement results are shown in Table 4.

### <Comparative Example>

### (Synthetic method)

Of the monoclinic complex oxides expressed by the general formula LiₓM1M2₂O_{(7±δ)} (0 ≤ x 5, 0 ≤ δ ≤ 0.3), TiNb₂O₇ wherein x = 0, M1 = Ti, and M2 = Nb was synthesized.

The raw material compounds were commercially available oxide reagents Nb₂O₅ and TiO₂. These raw material oxides were weighed to give a molar ratio of 1 : 1, and mixed in a mortar. Subsequently, the mixture was placed in an electric furnace, and sintered continuously at 1400°C for 20 hours. It was a known synthetic method including no subsequent heat treatment.

### (Powder x-ray diffractometry)

The sample thus obtained was subjected to powder x-ray diffractometry and Rietveld analysis in the same manner as in Synthesis Example 1. As a result of this, the occupancies of the respective elements in the 2a and 4i sites were 0.335 ± 0.03 for M1 = Ti, and 0.665 ± 0.03 for M2 = Nb, which are within the ranges of the assume values for the case wherein M1 and M2 are randomly arranged, or M1 = 0.33 ± 0.03 and M2 = 0.667 ± 0.03, indicating that M1 and M2 are randomly present. The fitting parameter obtained herein was S = 1.32 and σⱼ = 0.03, so that the result obtained from the occupancies in the site is considered sufficiently significant.

### (Electrochemical measurement)

Measurement was carried out in the same manner as in Synthesis Example 1. The measurement results are shown in Table 4.

**[Table 3]**

| Synthesis method | Main peak position 2θ/deg | Average particle size | BET specific surface area m²/g | Conductive aid |
|---|---|---|---|---|
| Synthesis Example 1 | 26.26 | 5.2 | 7.2 | Acetylene black |
| Synthesis Example 2 | 25.89 | 1.1 | 11.0 | Carbon coating + acetylene black |
| Synthesis Example 3 | 25.56 | 2.3 | 13.0 | Acetylene black |
| Synthesis Example 4 | 25.67 | 5.8 | 6.3 | Acetylene black |
| Synthesis Example 5 | 25.33 | 4.9 | 8.1 | Acetylene black |
| Synthesis Example 6 | 25.72 | 0.5 | 22.0 | Acetylene black |
| Synthesis Example 7 | 26.23 | 5.4 | 7.3 | Acetylene black |
| Synthesis Example 8 | 25.54 | 3.8 | 6.8 | Acetylene black |
| Synthesis Example 9 | 26.01 | 8.9 | 5.5 | Acetylene black |
| Comparative Example | 23.66 | 10.5 | 5.7 | Acetylene black |

**[Table 4]**

| Synthesis method | M1 occupancy in 2(a) | M2 occupancy in 2 (a) | Initial discharge capacity mAh/g | Initial charge and discharge efficiency % | Discharge capacity retention rate after 50 cycles (25°C) % | Charge and discharge efficiency after 50 cycles % | 1 C/0.2 C capacity ratio |
|---|---|---|---|---|---|---|---|
| Synthesis Example 1 | 0.186±0.04 | 0.814±0.04 | 290.5 | 92.5 | 95.3 | 99.8 | 0.98 |
| Synthesis Example 2 | 0.191±0.04 | 0.809±0.04 | 291.6 | 90.3 | 93.1 | 99.6 | 0.98 |
| Synthesis Example 3 | 0.156±0.03 | 0.844±0.03 | 288.3 | 91.4 | 91.8 | 99.6 | 0.99 |
| Synthesis Example 4 | 0.159±0.03 | 0.841±0.03 | 283.1 | 88.9 | 90.3 | 99.7 | 0.97 |
| Synthesis Example 5 | 0.153±0.03 | 0.847±0.03 | 285.1 | 89.2 | 89.5 | 99.3 | 0.96 |
| Synthesis Example 6 | 0.179±0.04 | 0.821±0.04 | 289.4 | 89.6 | 86.3 | 99.4 | 0.99 |
| Synthesis Example 7 | 0.175±0.04 | 0.825±0.04 | 289.1 | 92.1 | 95.0 | 99.8 | 0.98 |
| Synthesis Example 8 | 0.190±0.05 | 0.810±0.05 | 283.2 | 87.5 | 88.7 | 99.5 | 0.99 |
| Synthesis Example 9 | 0.188±0.05 | 0.812±0.05 | 287.9 | 91.6 | 92.1 | 99.8 | 0.99 |
| Comparative Example | 0.335±0.03 | 0.665±0.03 | 265.3 | 83.3 | 78.3 | 99.0 | 0.85 |

The results of charge and discharge test shown in Table 4 indicate the followings. More specifically, Synthesis Examples 1 to 8, which are complex oxides containing tetravalent and pentavalent cations maldistributed in the crystal structure, and Synthesis Example 9, which is a complex oxide containing tetravalent and hexavalent cations maldistributed in the crystal structure, have higher charge and discharge capacity, charge and discharge effectiveness, capacity retention rate, and rate performance in comparison with the comparative example containing tetravalent and pentavalent cations randomly arranged in the crystal structure.

In addition, the present application relates to the following items:
(1) An active material for battery comprising a monoclinic complex oxide which is expressed by the general formula LiₓM1M2₂O_{(7±δ)} (wherein M1 is at least one element selected from the group consisting of Ti, Zr, Si, and Sn, M2 is at least one element selected from the group consisting of Nb, V, Ta, Bi, and Mo, 0 ≤ x ≤ 5, and 0 ≤ δ ≤ 0.3), and has symmetry belonging to the space group C2/m (International tables Vol. A No. 12), wherein, in 2a or 4i occupied sites in a crystal of the monoclinic complex oxide, an occupancy g_{M1} of M1 is g_{M1} > 1/3 ± σⱼ or g_{M1} < 1/3 ± σⱼ, an occupancy g_{M2} of M2 is g_{M2} > 2/3 ± σⱼ or g_{M2} < 2/3 ± σⱼ, and g_{M1} + g_{M2} is 1.0, wherein σⱼ means the standard deviation when the occupancy is determined by the Rietveld method and σⱼ is in the range of 0.03 ≤ σⱼ ≤ 0.05.
(2) The active material for battery according to item 1, wherein the monoclinic complex oxide shows the strongest peak at 2θ = 26° ± 0.5° in the pattern of powder x-ray diffraction using a Cu-Kα line source.
(3) The active material for battery according to item 1 or 2, wherein the monoclinic complex oxide is TiNb₂O_{7±δ}.
(4) A nonaqueous electrolyte battery comprising:
   a negative electrode (3, 14) comprising the active material for battery according to any of items 1 to 3;
   a positive electrode (5, 13); and
   a nonaqueous electrolyte.
(5) A battery pack (20) comprising one or more nonaqueous electrolyte batteries according to item 4.

The active material of item (1) can be produced by the following method, which is not part of the claimed invention:

A method for manufacturing an active material for battery, comprising:
pulverizing and mixing a raw material compound containing at least one element M1 selected from the group consisting of Ti, Zr, Si, and Sn, and a raw material compound containing at least one element M2 selected from the group consisting of Nb, V, Ta, Bi, and Mo to obtain a mixture;
sintering the mixture at 1100 to 1500°C; and
annealing the sintered product at a temperature lower than 1000°C to obtain an active material for battery comprising a monoclinic complex oxide which is expressed by the general formula LiₓM1M2₂O_{(7±δ)} (wherein M1 and M2 are as defined above, 0 ≤ x ≤ 5, and 0 ≤ δ ≤ 0.3), and has symmetry belonging to the space group C2/m (International tables Vol. A No. 12), wherein, in 2a or 4i occupied sites in a crystal of the monoclinic complex oxide, an occupancy g_{M1} of M1 is g_{M1} > 1/3 ± σⱼ or g_{M1} < 1/3 ± σⱼ, an occupancy g_{M2} of M2 is g_{M2} > 2/3 ± σⱼ or g_{M2} < 2/3 ± σⱼ, and g_{M1} + g_{M2} is 1.0, wherein σⱼ means the standard deviation when the occupancy is determined by the Rietveld method and σⱼ is in the range of 0.03 ≤ σⱼ ≤ 0.05.

## Claims

1. An active material for battery comprising a monoclinic complex oxide which is expressed by the general formula LiₓM1M2₂O_{(7±δ)}, wherein M1 is at least one element selected from the group consisting of Ti, Zr, Si, and Sn, M2 is at least one element selected from the group consisting of Nb, V, Ta, Bi, and Mo, 0 ≤ x ≤ 5, and 0 ≤ 5 ≤ 0.3, and has symmetry belonging to the space group C2/m in International tables Vol. A No. 12,
**characterized in that**
in 2a or 4i occupied sites in a crystal of the monoclinic complex oxide, an occupancy g_{M1} of M1 is g_{M1} > 1/3 ± σⱼ or g_{M1} < 1/3 ± σⱼ, an occupancy g_{M2} of M2 is g_{M2} > 2/3 ± σⱼ or g_{M2} < 2/3 ± σⱼ, and g_{M1} + g_{M2} is 1.0, wherein σⱼ means the standard deviation when the occupancy is determined by the Rietveld method and σⱼ is in the range of 0.03 ≤ σⱼ ≤ 0.05.

2. The active material for battery according to claim 1, wherein the monoclinic complex oxide shows the strongest peak at 2θ = 26° ± 0.5° in the pattern of powder x-ray diffraction using a Cu-Kα line source.

3. The active material for battery according to claim 1 or 2, wherein the monoclinic complex oxide is TiNb₂O_{7±δ}.

4. The active material for battery according to claims 1 or 2, wherein M2 is at least one element selected from the group of Ta and Mo.

5. A nonaqueous electrolyte battery comprising:
a negative electrode (3, 14) comprising the active material for battery according to any of claims 1 to 4;
a positive electrode (5, 13); and
a nonaqueous electrolyte.

6. A battery pack (20) comprising one or more nonaqueous electrolyte batteries according to claim 5.

## Patentansprüche

1. Aktivmaterial für eine Batterie, umfassend ein monoklines komplexes Oxid, das durch die allgemeine Formel LiₓM1M2₂O_{(7±δ)} ausgedrückt wird, worin M1 mindestens ein Element ist, das aus der Gruppe ausgewählt ist, die aus Ti, Zr, Si und Sn besteht, M2 mindestens ein Element ist, das aus der Gruppe ausgewählt ist, die aus Nb, V, Ta, Bi und Mo besteht, 0 ≤ x ≤ 5 ist und 0 ≤ δ ≤ 0,3 ist, und eine Symmetrie aufweist, die zur Raumgruppe C2/m in International Tables Vol. A, Nr. 12 gehört,
**dadurch gekennzeichnet, dass**
in besetzten 2a- oder 4i-Plätzen in einem Kristall des monoklinen komplexen Oxids eine Belegung g_{M1} von M1 g_{M1} > 1/3 ± σⱼ oder g_{M1} < 1/3 ± σⱼ ist, eine Belegung g_{M2} von M2 g_{M2} > 2/3 ± σⱼ oder g_{M2} < 2/3 ± σⱼ ist und g_{M1} + g_{M2} = 1,0 ist,
wobei σⱼ die Standardabweichung bezeichnet, wenn die Belegung durch das Rietveld-Verfahren bestimmt wird, und σⱼ im Bereich von 0,03 ≤ σⱼ ≤ 0,05 liegt.

2. Aktivmaterial für eine Batterie gemäß Anspruch 1, wobei das monokline komplexe Oxid den stärksten Peak bei 2θ = 26° ± 0.5° im Pulverröntgenbeugungsmuster unter Verwendung einer Cu-Kα-Linien-Quelle zeigt.

3. Aktivmaterial für eine Batterie gemäß Anspruch 1 oder 2, wobei das monokline komplexe Oxid TiNb₂O_{7±δ} ist.

4. Aktivmaterial für Batterie gemäß Anspruch 1 oder 2, wobei M2 mindestens ein Element ist, das aus der Gruppe von Ta und Mo ausgewählt ist.

5. Batterie mit nicht-wässrigem Elektrolyt, umfassend:
eine negative Elektrode (3, 14), die das Aktivmaterial für eine Batterie gemäß einem der Ansprüche 1 bis 4 umfasst;
eine positive Elektrode (5, 13); und
einen nicht-wässrigen Elektrolyten.

6. Batteriepack (20), umfassend eine oder mehrere Batterien mit nicht-wässrigem Elektrolyt gemäß Anspruch 5.

## Revendications

1. Matière active pour accumulateur comprenant un oxyde complexe monoclinique qui est exprimé par la formule générale LiₓM1M2₂O_{(7±δ)}, dans laquelle M1 est au moins un élément choisi dans le groupe constitué de Ti, Zr, Si, et Sn, M2 est au moins un élément choisi dans le groupe constitué de Nb, V, Ta, Bi, et Mo, 0 ≤ x ≤ 5, et 0 ≤ δ ≤ 0,3, et présente une symétrie appartenant au groupe d'espace C2/m dans les tables internationales Vol. A n° 12,
**caractérisée en ce que**
dans les sites 2a ou 4i occupés dans un cristal de l'oxyde complexe monoclinique, un taux d'occupation g_{M1} de M1 est g_{M1} > 1/3 ± σⱼ ou g_{M1} < 1/3 ± σⱼ, un taux d'occupation g_{M2} de M2 est g_{M2} > 2/3 ± σⱼ ou g_{M2} < 2/3 ± σ_{j,} et g_{M1} + g_{M2} est 1,0, dans lequel σⱼ désigne l'écart type quand le taux d'occupation est déterminé par le procédé de Rietveld et σⱼ se situe dans la plage de 0,03 ≤ σⱼ ≤ 0,05.

2. Matière active pour accumulateur selon la revendication 1, dans laquelle l'oxyde complexe monoclinique présente le pic le plus fort à 2θ = 26° ± 0,5° dans le motif de diffraction de rayons X sur poudres en utilisant une source linéaire Cu-Kα.

3. Matière active pour accumulateur selon la revendication 1 ou 2, dans laquelle l'oxyde complexe monoclinique est TiNb₂O_{7±δ}.

4. Matière active pour accumulateur selon la revendication 1 ou 2, dans laquelle M2 est au moins un élément choisi dans le groupe constitué de Ta et Mo.

5. Accumulateur à électrolyte non aqueux comprenant :
une électrode négative (3, 14) comprenant la matière active pour accumulateur selon l'une quelconque des revendications 1 à 4;
une électrode positive (5, 13) ; et
un électrolyte non aqueux.

6. Bloc d'accumulateurs (20) comprenant un ou plusieurs accumulateurs à électrolyte non aqueux selon la revendication 5.
